(19) Europäisches Patentamt
European Patent Office
Office européen des brevets

(11) EP 4 776 539 A1

(12) **EUROPEAN PATENT APPLICATION**
published in accordance with Art. 153(4) EPC

(43) Date of publication:
15.07.2026 Bulletin 2026/29

(51) International Patent Classification (IPC):
*H04L 1/00* (2006.01)

(21) Application number: 24869827.6

(22) Date of filing: 04.06.2024

(52) Cooperative Patent Classification (CPC):
H04L 1/00; H04L 27/34

(86) International application number:
PCT/CN2024/097254

(87) International publication number:
WO 2025/066265 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311294686

(71) Applicant: HUAWEI TECHNOLOGIES CO., LTD.
Shenzhen 518129 (CN)

(72) Inventors:
• HUANG, Qinhui
  Shenzhen, Guangdong 518129 (CN)
• YANG, Xiaoling
  Shenzhen, Guangdong 518129 (CN)
• MA, Huixiao
  Shenzhen, Guangdong 518129 (CN)
• HUANG, Kechao
  Shenzhen, Guangdong 518129 (CN)

(74) Representative: Pfenning, Meinig & Partner mbB
Patent- und Rechtsanwälte
Theresienhöhe 11a
80339 München (DE)

(54) **DATA MAPPING METHOD AND RELATED APPARATUS**

(57) Embodiments of this application disclose a data mapping method and a related apparatus, so that a high coding gain can be obtained while good compatibility is maintained, and a capability to resist a channel burst error can be ensured. Specifically, a first data stream obtained through outer encoding is obtained. Then, inner encoding is performed on the first data stream to obtain a second data stream, where the second data stream includes L codewords obtained through second FEC encoding, L is an integer multiple of 8, each codeword includes n bits, and n is an odd number greater than 1. Then, interleaved mapping is performed on the L codewords to obtain $n \times L/8$ dual-polarization DP-16QAM symbols, where any one of an I component in an X polarization direction, a Q component in the X polarization direction, an I component in a Y polarization direction, and a Q component in the Y polarization direction that are of each DP-16QAM symbol is obtained by mapping 2 bits in the L codewords, and each DP-16QAM symbol is obtained by mapping 8 bits respectively from eight codewords.

```
┌─────────────────────────────────────┐
│ Obtain a first data stream obtained  │──── 101
│ through first FEC encoding           │
└─────────────────────────────────────┘
                  │
┌─────────────────────────────────────┐
│ Perform second FEC encoding on the   │──── 102
│ first data stream to obtain a second │
│ data stream                          │
└─────────────────────────────────────┘
                  │
┌─────────────────────────────────────┐
│ Perform interleaved mapping on L     │──── 103
│ codewords to obtain n×L/8 DP-16QAM   │
│ symbols                              │
└─────────────────────────────────────┘
```

FIG. 4

EP 4 776 539 A1

## Description

This application claims priority to Chinese Patent Application No. 202311294686.5, filed with the China National Intellectual Property Administration on September 28, 2023 and entitled "DATA MAPPING METHOD AND RELATED APPARATUS", which is incorporated herein by reference in its entirety

## TECHNICAL FIELD

Embodiments of this application relate to the field of optical communication, and in particular, to a data mapping method and a related apparatus.

## BACKGROUND

Driven continuously by 5G, cloud computing, big data, artificial intelligence, and the like, an optical communication system and optical transport network (optical transport network, OTN) are developing toward a large capacity and an ultra-high speed. Transmitted data is corrected by using forward error correction (forward error correction, FEC) encoding, so that bit error transmission can be avoided, and original data sent from a transmitter can be recovered from received data.

In a 400G ZR scenario, an optical module uses CFEC (Concatenated-FEC) as an error correction encoding scheme. A staircase code is used as an outer code, and a double-extended Hamming (Hamming) code is used as an inner code. Before a data stream obtained through inner encoding is sent to a transmission medium, symbol mapping and channel interleaving need to be performed. The purpose is to enhance a capability of CFEC to resist a channel burst error. In an existing solution, channel interleaving is designed on a basis that a length of an inner codeword is a multiple of 8. In a future 1.6T ZR scenario, because a transmission rate is greatly increased, performance of an existing CFEC scheme cannot meet a link budget of the scenario. Therefore, a codeword with higher performance and a corresponding channel interleaving manner are urgently needed.

## SUMMARY

Embodiments of this application provide a data mapping method and a related apparatus, so that a high coding gain can be obtained while good compatibility is maintained, and a capability to resist a channel burst error can be ensured.

According to a first aspect, an embodiment of this application provides a data mapping method. First, a first data stream on which first forward error correction (forward error correction, FEC) encoding is performed is obtained, where first FEC encoding may be considered as outer encoding. Then, second FEC encoding is performed on the first data stream to obtain a second data stream, where second FEC encoding may be considered as inner encoding. The second data stream includes L codewords obtained through second FEC encoding, where L is an integer multiple of 8, each codeword includes n bits, and n is an odd number greater than 1. Then, interleaved mapping is performed on the L codewords to obtain $n \times L/8$ dual-polarization (Dual-polarization, DP)-16QAM symbols, where any one of an I component in an X polarization direction, a Q component in the X polarization direction, an I component in a Y polarization direction, and a Q component in the Y polarization direction that are of each DP-16QAM symbol is obtained by mapping 2 bits in the L codewords, and each DP-16QAM symbol is obtained by mapping 8 bits respectively from eight codewords.

In this implementation, an inner codeword designed in this solution includes an odd number of bits, and a BCH code with an error correction capability of 2 bits or an extended code of the BCH code may be used, to improve inner encoding performance. For example, existing (128, 119) encoding may be replaced by an encoding scheme such as (135, 119) encoding or (137, 119) encoding, so that a high coding gain can be obtained while good compatibility is maintained. Because a length of an inner codeword used in this solution is no longer a multiple of 8, a method for independently mapping each inner codeword to a DP-16QAM symbol in an existing interleaved mapping solution is no longer applicable. Therefore, an interleaved mapping manner is specifically designed in this application, to be specific, each DP-16QAM symbol is obtained by mapping 8 bits from eight codewords, so that a capability to resist a channel burst error can also be ensured.

In some possible implementations, the L codewords include L/2 first-type codewords and L/2 second-type codewords. $\left\lfloor \frac{n}{2} \right\rfloor$ bits in each of the first-type codewords are mapped to most significant bits (most significant bits, MSBs) of four polarization components in the $n \times L/8$ DP-16QAM symbols, and $\left\lceil \frac{n}{2} \right\rceil$ bits in each of the first-type codewords are mapped to least significant bits (least significant bits, LSBs) of the four polarization components in the $n \times L/8$ DP-16QAM symbols. $\left\lceil \frac{n}{2} \right\rceil$ bits in each of the second-type codewords are mapped to MSBs of the four polarization components in the $n \times L/8$ DP-16QAM symbols, and $\left\lfloor \frac{n}{2} \right\rfloor$ bits in each of the second-type codewords are mapped to LSBs of the four polarization components in the $n \times L/8$ DP-16QAM symbols. $\lfloor \cdot \rfloor$ represents rounding down, and $\lceil \cdot \rceil$ represents rounding up. To be specific, bits in each codeword are mapped to the MSBs and LSBs of the four polarization components in the $n \times L/8$ DP-16QAM symbols as evenly as possible. Because the MSBs and the LSBs have different noise resistance capabilities, bits in each inner codeword are evenly mapped to the MSBs and the LSBs, so that encoding and decoding performance can be maximized.

In some possible implementations, a quantity of bits that are from any codeword and that are in $2 \times n \times L/8$ bits included in any polarization component of the $n \times L/8$ DP-16QAM symbols is w, and $2 \times \left\lfloor \frac{n}{8} \right\rfloor \leq w \leq 2 \times \left\lceil \frac{n}{8} \right\rceil$. To be specific, quantities of bits that are from respective codewords and that are in the $2 \times n \times L/8$ bits included in any polarization component of the $n \times L/8$ DP-16QAM symbols are as close as possible or the same. This helps reduce performance deterioration caused by continuous errors.

In some possible implementations, a quantity of bits that are of each codeword and that are mapped to any polarization component of the $n \times L/8$ DP-16QAM symbols is r, and $2 \times \left\lfloor \frac{n}{8} \right\rfloor \leq r \leq 2 \times \left\lceil \frac{n}{8} \right\rceil$. To be specific, quantities of bits that are of respective codewords and that are mapped to any polarization component of the $n \times L/8$ DP-16QAM symbols are as close as possible or the same. This helps reduce performance deterioration caused by continuous errors.

In some possible implementations, every consecutive $L/8$ DP-16QAM symbols in the $n \times L/8$ DP-16QAM symbols are obtained by mapping L bits respectively from the L codewords. In a scenario in which L is greater than 8, this interleaved mapping manner may also be well compatible with the inner codeword provided in embodiments of this application.

In some possible implementations, $X_I^l$ is obtained by mapping an $\lfloor \frac{8l}{L} \rfloor$th bit of an $(8 \times (l\%(\frac{L}{8}))00(( \lfloor \frac{8l}{L} \rfloor \%8 ))$th codeword and an $\lfloor \frac{8l}{L} \rfloor$th bit of an $(8 \times (l\%(\frac{L}{8}))01(( \lfloor \frac{8l}{L} \rfloor \%8 ))$th codeword, $X_Q^l$ is obtained by mapping an $\lfloor \frac{8l}{L} \rfloor$th bit of an $(8 \times (l\%(\frac{L}{8}))02(( \lfloor \frac{8l}{L} \rfloor \%8 ))$th codeword and an $\lfloor \frac{8l}{L} \rfloor$th bit of an $(8 \times (l\%(\frac{L}{8}))03(( \lfloor \frac{8l}{L} \rfloor \%8 ))$th codeword, $Y_I^l$ is obtained by mapping an $\lfloor \frac{8l}{L} \rfloor$th bit of an $(8 \times (l\%(\frac{L}{8})) 04(( \lfloor \frac{8l}{L} \rfloor \%8 ))$th codeword and an $\lfloor \frac{8l}{L} \rfloor$th bit of an $(8 \times (l\%(\frac{L}{8})) 05(( \lfloor \frac{8l}{L} \rfloor \%8 ))$th codeword, and

$Y_Q^l$ is obtained by mapping an $\lfloor \frac{8l}{L} \rfloor$th bit of an $(8 \times (l\%(\frac{L}{8})) 06(( \lfloor \frac{8l}{L} \rfloor \%8 ))$th codeword and an $\lfloor \frac{8l}{L} \rfloor$th bit of an $(8 \times (l\%(\frac{L}{8})) 07(( \lfloor \frac{8l}{L} \rfloor \%8 ))$th codeword. $X_I^l$ represents an lth pulse amplitude modulation PAM4 symbol component of an I component in the X polarization direction in the $n \times L/8$ DP-16QAM symbols, $X_Q^l$ represents an lth PAM4 symbol component of a Q component in the X polarization direction in the $n \times L/8$ DP-16QAM symbols, $Y_I^l$ represents an lth PAM4 symbol component of an I component in the Y polarization direction in the $n \times L/8$ DP-16QAM symbols, and $Y_Q^l$ represents an lth PAM4 symbol component of a Q component in the Y polarization direction in the $n \times L/8$ DP-16QAM symbols, where $0 \leq l \leq \frac{L \times n}{8} - 1$, a% b represents a modulo operation on a using b, and a^b represents an exclusive OR operation of a and b. This implementation provides an exclusive OR shift manner for interleaved mapping, to enhance practicability of this solution.

In some possible implementations, $X_I^l$ is obtained by mapping an $\lfloor \frac{8l}{L} \rfloor$th bit of an $(8 \times (l\%(\frac{L}{8}))0((00(\lfloor \frac{8l}{L} \rfloor)\%8))$th codeword and an $\lfloor \frac{8l}{L} \rfloor$th bit of an $(8 \times (l\%(\frac{L}{8}))0((10(\lfloor \frac{8l}{L} \rfloor)\%8))$th codeword, $X_Q^l$ is obtained by mapping an $\lfloor \frac{8l}{L} \rfloor$th bit of an $(8 \times (l\%(\frac{L}{8})) 0((20(\lfloor \frac{8l}{L} \rfloor)\%8 ))$th codeword and an $\lfloor \frac{8l}{L} \rfloor$th bit of an $(8 \times (l\%(\frac{L}{8}))0((30(\lfloor \frac{8l}{L} \rfloor)\%8))$th codeword, $Y_I^l$ is obtained by mapping an $\lfloor \frac{8l}{L} \rfloor$th bit of an $(8 \times (l\%(\frac{L}{8}))0((40(\lfloor \frac{8l}{L} \rfloor)\%8))$th codeword and an $\lfloor \frac{8l}{L} \rfloor$th bit of an

$(8 \times (l\%(\frac{L}{8}))0((50(\lfloor\frac{8l}{L}\rfloor)\%8)))$th codeword, and

$Y_Q^l$ is obtained by mapping an $\lfloor\frac{8l}{L}\rfloor$th bit of an $(8 \times (l\%(\frac{L}{8}))0((60(\lfloor\frac{8l}{L}\rfloor)\%8)))$th codeword and

an $\lfloor\frac{8l}{L}\rfloor$th bit of an $(8 \times (l\%(\frac{L}{8}))0((70(\lfloor\frac{8l}{L}\rfloor)\%8)))$th codeword.

$X_I^l$ represents an $l$ th PAM4 symbol component of an I component in the X polarization direction in the n×L/8 DP-16QAM symbols, $X_Q^l$ represents an $l$th PAM4 symbol component of a Q component in the X polarization direction in the n×L/8 DP-16QAM symbols, $Y_I^l$ represents an $l$th PAM4 symbol component of an I component in the Y polarization direction in the n×L/8 DP-16QAM symbols, and $Y_Q^l$ represents an $l$th PAM4 symbol component of a Q component in the Y polarization direction in the n×L/8 DP-16QAM symbols, where

$0 \le l \le \frac{L \times n}{8} - 1$ . This implementation provides a cyclic shift manner for interleaved mapping, to improve flexibility of this solution.

In some possible implementations, a quantity of information bits in a codeword is k=119, and n=133, 135, or 137. While maintaining compatibility with 400G ZR, a BCH code with an error correction capability of 2 bits or an extended code of the BCH code may be used, to help improve inner encoding performance.

In some possible implementations, the first FEC encoding uses staircase (512, 510) encoding, and has a good practical effect.

In some possible implementations, bit padding is further performed on the first data stream obtained through the first FEC encoding, to help a receiver well synchronize an inner code and an outer code. A quantity of padding bits is greater than or equal to 1.

In some possible implementations, convolutional interleaving is further performed on the first data stream obtained through the first FEC encoding.

In some possible implementations, before obtaining the first data stream obtained through the first FEC encoding, the method further includes: performing data distribution on an input data stream to obtain four lanes of distributed data streams, where every consecutive 4 bits in the input data stream are respectively distributed to the four lanes of distributed data streams; and performing the first FEC encoding on each distributed data stream. This data mapping method is used, to help compatibility with throughput scenarios such as 1.6T, 800G, and 400G.

According to a second aspect, an embodiment of this application provides a data mapping apparatus. The data mapping apparatus includes: an obtaining unit, an encoding unit, and an interleaved mapping unit. The obtaining unit is configured to obtain a first data stream obtained through first FEC encoding. The encoding unit is configured to perform second FEC encoding on the first data stream to obtain a second data stream. The second data stream includes L codewords obtained through second FEC encoding, where L is an integer multiple of 8, each codeword includes n bits, and n is an odd number greater than 1. The interleaved mapping unit is configured to perform interleaved mapping on the L codewords to obtain n×L/8 DP-16QAM symbols. Any one of an I component in an X polarization direction, a Q component in the X polarization direction, an I component in a Y polarization direction, and a Q component in the Y polarization direction that are of each DP-16QAM symbol is obtained by mapping 2 bits in the L codewords, and each DP-16QAM symbol is obtained by mapping 8 bits respectively from eight codewords.

In some possible implementations, the L codewords include L/2 first-type codewords and L/2 second-type codewords. $\lfloor\frac{n}{2}\rfloor$ bits in each of the first-type codewords are mapped to MSBs of the four polarization components in the n×L/8 DP-16QAM symbols, and $\lceil\frac{n}{2}\rceil$ bits in each of the first-type codewords are mapped to LSBs of the four polarization components in the n×L/8 DP-16QAM symbols. $\lceil\frac{n}{2}\rceil$ bits in each of the second-type codewords are mapped to MSBs of the four polarization components in the n×L/8 DP-16QAM symbols, and $\lfloor\frac{n}{2}\rfloor$ bits in each of the second-type codewords are mapped to LSBs of the four polarization components in the n×L/8 DP-16QAM symbols. $\lfloor \cdot \rfloor$ represents rounding down, and $\lceil \cdot \rceil$ represents rounding up. To be specific, bits in each codeword are mapped to the MSBs and LSBs of the four polarization components in the n×L/8 DP-16QAM symbols as evenly as possible. Because the MSBs and the LSBs have different noise resistance capabilities, bits in each inner codeword are evenly mapped to the MSBs and the LSBs, so that encoding and decoding performance can be maximized.

In some possible implementations, a quantity of bits that are from any codeword and that are in 2×n×L/8 bits included in any polarization component of the n×L/8 DP-16QAM symbols is w, and $2 \times \lfloor\frac{n}{8}\rfloor \le w \le 2 \times \lceil\frac{n}{8}\rceil$ . To be specific, quantities of bits that are from respective codewords and that are in the 2×n×L/8 bits included in any polarization component of the n×L/8 DP-16QAM symbols are as close as possible or the same. This helps reduce performance deterioration caused by continuous errors.

In some possible implementations, a quantity of bits that are of each codeword and that are mapped to any polarization component of the n×L/8 DP-16QAM symbols is r, and $2 \times \lfloor \frac{n}{8} \rfloor \leq r \leq 2 \times \lceil \frac{n}{8} \rceil$. To be specific, quantities of bits that are of respective codewords and that are mapped to any polarization component of the n×L/8 DP-16QAM symbols are as close as possible or the same. This helps reduce performance deterioration caused by continuous errors.

In some possible implementations, every consecutive L/8 DP-16QAM symbols in the n×L/8 DP-16QAM symbols are obtained by mapping L bits respectively from the L codewords.

In some possible implementations, $X_I^l$ is obtained by mapping an $\lfloor \frac{8l}{L} \rfloor$th bit of an $(8 \times (l\%(\frac{L}{8}))00((\lfloor \frac{8l}{L} \rfloor \%8))$th codeword and an $\lfloor \frac{8l}{L} \rfloor$th bit of an $(8 \times (l\%(\frac{L}{8}))01((\lfloor \frac{8l}{L} \rfloor \%8))$th codeword, $X_Q^l$ is obtained by mapping an $\lfloor \frac{8l}{L} \rfloor$th of an $(8 \times (l\%(\frac{L}{8}))02((\lfloor \frac{8l}{L} \rfloor \%8))$th codeword and an $\lfloor \frac{8l}{L} \rfloor$th bit of an $(8 \times (l\%(\frac{L}{8}))03((\lfloor \frac{8l}{L} \rfloor \%8))$th codeword, $Y_I^l$ is obtained by mapping an $\lfloor \frac{8l}{L} \rfloor$th bit of an $(8 \times (l\%(\frac{L}{8}))04((\lfloor \frac{8l}{L} \rfloor \%8))$th codeword and an $\lfloor \frac{8l}{L} \rfloor$th bit of an $(8 \times (l\%(\frac{L}{8}))05((\lfloor \frac{8l}{L} \rfloor \%8))$th codeword, and $Y_Q^l$ is obtained by mapping an $\lfloor \frac{8l}{L} \rfloor$th bit of an $(8 \times (l\%(\frac{L}{8}))06((\lfloor \frac{8l}{L} \rfloor \%8))$th codeword and an $\lfloor \frac{8l}{L} \rfloor$th bit of an $(8 \times (l\%(\frac{L}{8}))07((\lfloor \frac{8l}{L} \rfloor \%8))$th codeword. $X_I^l$ represents an lth pulse amplitude modulation PAM4 symbol component of an I component in the X polarization direction in the n×L/8 DP-16QAM symbols, $X_Q^l$ represents an lth PAM4 symbol component of a Q component in the X polarization direction in the n×L/8 DP-16QAM symbols, $Y_I^l$ represents an lth PAM4 symbol component of an I component in the Y polarization direction in the n×L/8 DP-16QAM symbols, and $Y_Q^l$ represents an lth PAM4 symbol component of a Q component in the Y polarization direction in the n×L/8 DP-16QAM symbols, where $0 \leq l \leq \frac{L \times n}{8} - 1$, a% b represents a modulo operation on a using b, and a^b represents an exclusive OR operation of a and b. This implementation provides an exclusive OR shift manner for interleaved mapping, to enhance practicability of this solution.

In some possible implementations, $X_I^l$ is obtained by mapping an $\lfloor \frac{8l}{L} \rfloor$th bit of an $(8 \times (l\%(\frac{L}{8}))0((00(\lfloor \frac{8l}{L} \rfloor)\%8))$th codeword and an $\lfloor \frac{8l}{L} \rfloor$th bit of an $(8 \times (l\%(\frac{L}{8}))0((10(\lfloor \frac{8l}{L} \rfloor)\%8))$th codeword, $X_Q^l$ is obtained by mapping an $\lfloor \frac{8l}{L} \rfloor$th bit of an $(8 \times (l\%(\frac{L}{8}))0((20(\lfloor \frac{8l}{L} \rfloor)\%8))$th codeword and an $\lfloor \frac{8l}{L} \rfloor$th bit of an $(8 \times (l\%(\frac{L}{8}))0((30(\lfloor \frac{8l}{L} \rfloor)\%8))$th codeword, $Y_I^l$ is obtained by mapping an $\lfloor \frac{8l}{L} \rfloor$th bit of an $(8 \times (l\%(\frac{L}{8}))0((40(\lfloor \frac{8l}{L} \rfloor)\%8))$th codeword and an $\lfloor \frac{8l}{L} \rfloor$th bit of an $(8 \times (l\%(\frac{L}{8}))0((50(\lfloor \frac{8l}{L} \rfloor)\%8))$th codeword, and $Y_Q^l$ is obtained by mapping an $\lfloor \frac{8l}{L} \rfloor$th bit of an $(8 \times (l\%(\frac{L}{8}))0((60(\lfloor \frac{8l}{L} \rfloor)\%8))$th codeword and an $\lfloor \frac{8l}{L} \rfloor$th bit of an $(8 \times (l\%(\frac{L}{8}))0((70(\lfloor \frac{8l}{L} \rfloor)\%8))$th codeword. $X_I^l$ represents an l th PAM4 symbol component of an I component in the X polarization direction in the n×L/8 DP-16QAM symbols, $X_Q^l$ represents an lth PAM4 symbol component of a Q component in the X polarization direction in the n×L/8 DP-16QAM symbols, $Y_I^l$ represents an lth PAM4 symbol component of an I component in the Y polarization direction in the n×L/8 DP-16QAM symbols, and $Y_Q^l$ represents an lth PAM4 symbol component of a Q component in the Y polarization direction in the n×L/8 DP-16QAM symbols, where $0 \le l \le \frac{L \times n}{8} - 1$. This implementation provides a cyclic shift manner for interleaved mapping, to improve flexibility of this solution.

In some possible implementations, a quantity of information bits in a codeword is k=119, and n=133, 135, or 137. While maintaining compatibility with 400G ZR, a BCH code with an error correction capability of 2 bits or an extended code of the BCH code may be used, to help improve inner encoding performance.

In some possible implementations, the first FEC encoding uses staircase (512, 510) encoding, and has a good practical effect.

In some possible implementations, bit padding is further performed on the first data stream obtained through the first FEC encoding, to help a receiver well synchronize an inner code and an outer code. A quantity of padding bits is greater than or equal to 1.

In some possible implementations, convolutional interleaving is further performed on the first data stream obtained through the first FEC encoding.

In some possible implementations, the data mapping apparatus further includes a processing unit. Before obtaining the first data stream obtained through the first FEC encoding, the processing unit is configured to: perform data distribution on an input data stream to obtain four lanes of distributed data streams, where every consecutive 4 bits in the input data stream are respectively distributed to the four lanes of distributed data streams; and perform the first FEC encoding on each distributed data stream.

According to a third aspect, an embodiment of this application provides a chip. The chip includes a processor and a memory, the memory and the processor are connected to each other through a line, the memory stores instructions, and the processor is configured to perform the method according to any one of the implementations of the first aspect.

According to a fourth aspect, an embodiment of this application provides a data transmission system. The data transmission system includes a data sending device and a data receiving device. The data sending device is configured to: perform the method according to any one of the implementations of the first aspect; and send data to the data receiving device. The data receiving device is configured to perform an operation such as decoding on the received data.

According to a fifth aspect, an embodiment of this application provides a computer-readable storage medium. The computer-readable storage medium stores a computer program, and when the computer program is executed by a computer, the method according to any one of the implementations of the first aspect is implemented.

According to the foregoing technical solutions, it can be learned that embodiments of this application have the following advantages.

In this implementation, an inner codeword designed in this solution includes an odd number of bits, and a BCH code with an error correction capability of 2 bits or an extended code of the BCH code may be used, to improve inner encoding performance. For example, existing (128, 119) encoding may be replaced by an encoding scheme such as (135, 119) encoding or (137, 119) encoding, so that a high coding gain can be obtained while good compatibility is maintained. Because a length of an inner codeword used in this solution is no longer a multiple of 8, a method for independently mapping each inner codeword to a DP-16QAM symbol in an existing interleaved mapping solution is no longer applicable. Therefore, an interleaved mapping manner is specifically designed in this application, to be specific, each DP-16QAM symbol is obtained by mapping 8 bits from eight codewords, so that a capability to resist a channel burst error can also be ensured.

## BRIEF DESCRIPTION OF DRAWINGS

FIG. 1 is a diagram of a communication system to which an embodiment of this application is applied;
FIG. 2 is a diagram of another communication system to which an embodiment of this application is applied;
FIG. 3 is a diagram of an implementation of transmitter data processing and receiver data processing according to an embodiment of this application;
FIG. 4 is a schematic flowchart of a data mapping method according to an embodiment of this application;
FIG. 5 is a diagram of a first application scenario of interleaved mapping according to an embodiment of this application;
FIG. 6 is a diagram of a second application scenario of interleaved mapping according to an embodiment of this application;
FIG. 7 is a diagram of a third application scenario of interleaved mapping according to an embodiment of this application;
FIG. 8 is a diagram of a fourth application scenario of interleaved mapping according to an embodiment of this application;
FIG. 9 is a diagram of a fifth application scenario of interleaved mapping according to an embodiment of this application;
FIG. 10 is a diagram of a sixth application scenario of interleaved mapping according to an embodiment of this application;

FIG. 11 is a diagram of an implementation of a multi-lane parallel transmitter data processor according to an embodiment of this application;

FIG. 12 is a diagram of an implementation of data distribution according to an embodiment of this application;

FIG. 13 is a diagram of a structure of a data mapping apparatus according to an embodiment of this application; and

FIG. 14 is a diagram of another structure of a data mapping apparatus according to an embodiment of this application.

## DESCRIPTION OF EMBODIMENTS

Embodiments of this application provide a data mapping method and a related apparatus, so that a high coding gain can be obtained while good compatibility is maintained, and a capability to resist a channel burst error can be ensured. It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, method, system, product, or device that includes a list of steps or units is not necessarily limited to those expressly enumerated steps or units, but may include other steps or units not expressly enumerated or inherent to such a process, method, product, or device.

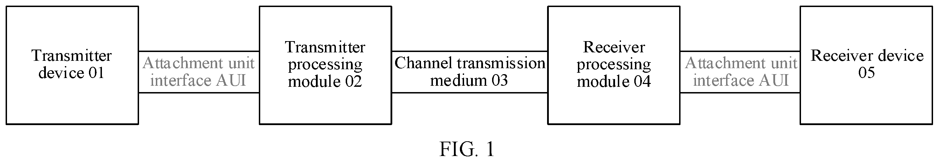

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 may be devices such as a switch or a router, the transmitter device 01 is also referred to as a client-side chip (host chip) located at a transmitter, the receiver device 05 is also referred to as a client-side chip located at a receiver, and the channel transmission medium 03 may be an optical fiber. The client-side chip is also sometimes referred to as a client-side device (host device). The transmitter device 01 may be connected to the transmitter processing module 02 through an attachment unit interface (attachment unit interface, AUI), and the receiver device 05 may be connected to the receiver processing module 04 through an AUI. The transmitter processing module 02 and the receiver processing module 04 may each be an optical module (optical module), an electrical module, a connector (connector), or another module that processes data in a data sending process. For example, the processing module may be an 800 ZR module (800 ZR module, which is a coherent optical module). In addition, all the transmitter device 01, the transmitter processing module 02, the channel transmission medium 03, the receiver processing module 04, and the receiver device 05 in the communication system may support bidirectional transmission or unidirectional transmission. This is not specifically limited herein.

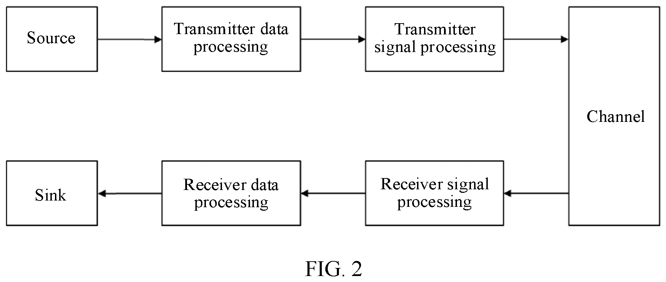

FIG. 2 is a diagram of another communication system to which an embodiment of this application is applied. As shown in FIG. 2, at a transmitter, a source provides a to-be-sent data stream. A transmitter data processor receives the data stream, performs data processing including encoding, interleaving, and modulation on the data stream to obtain a symbol data stream, and sends the symbol data stream to a transmitter signal processor for framing, and transmits the symbol data stream to a receiving device through a channel. After receiving a signal that is distorted due to noise or other impairments on the channel, the receiving device sends the signal to a receiver signal processor for dispersion compensation, synchronization, phase recovery, and other operations. Then, the signal is sent to the receiver data processing for performing demodulation, de-interleaving, and decoding, to restore original data, and send the data to a sink. Transmitter data processing and transmitter signal processing shown in FIG. 2 may be applied to the transmitter processing module 02 shown in FIG. 1, and receiver data processing and receiver signal processing shown in FIG. 2 may be applied to the receiver processing module 04 shown in FIG. 1.

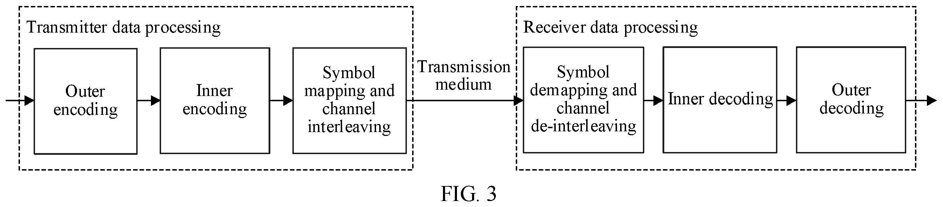

FIG. 3 is a diagram of an implementation of transmitter data processing and receiver data processing according to an embodiment of this application. As shown in FIG. 3, operations of the transmitter data processing include performing outer encoding, inner encoding, symbol mapping, and channel interleaving on an input data stream. Operations of the receiver data processing include performing symbol demapping, channel de-interleaving, inner decoding, and outer decoding on the input data stream. In some possible scenarios, operations such as padding bit insertion, scrambling, and convolutional interleaving may be further performed between outer encoding and inner encoding for the transmitter data processing. In this case, a corresponding inverse operation also needs to be performed for the receiver data processing.

It should be understood that the "inner" in an inner code and the "outer" in an outer code are distinguished based merely on a distance between an execution body that performs an operation on data and a channel transmission medium. An execution body that performs an operation on the inner code is closer to the channel transmission medium, and an execution body that performs an operation on the outer code is farther away from the channel transmission medium. In embodiments of this application, FIG. 1 is used as an example. Because the transmitter processing module 02 sequentially encodes data twice and then sends the encoded data to the channel transmission medium, data that is first encoded by the transmitter processing module 02 is farther away from the channel transmission medium, and data that is later encoded by the transmitter processing module 02 is closer to the channel transmission medium. In this way, the data that is first encoded by the transmitter processing module 02 is referred to as outer encoded data, and the data that is later encoded by the transmitter processing module 02 is referred to as inner encoded data. Correspondingly, data that is first decoded by the receiver processing module 04 is referred to as inner decoded data, and data that is later decoded by the receiver processing module 04 is referred to as outer decoded data. In a possible implementation, both the inner encoding and the outer encoding use an FEC encoding manner, so as to form a concatenated FEC transmission scheme. For example, the transmitter processing module 02 may perform outer encoding by using a staircase code, perform inner encoding by using a Hamming (Hamming) code, or perform inner encoding by using a Bose-Chaudhuri-Hocquenghem (Bose-Chaudhuri-Hocquenghem, BCH) code.

It should be noted that the foregoing content is example description of an application scenario of the data mapping method provided in embodiments of this application, and does not constitute any limitation on application scenarios of the data mapping method. A person of ordinary skill in the art may learn that, as a service requirement changes, the application scenario of the data mapping method may be adjusted based on an application requirement. Application scenarios are not listed one by one in embodiments of this application. The following mainly describes a data mapping method applied to a data transmitter. A data demapping method applied to a receiver may be understood as an inverse operation of the data mapping method of the transmitter. With the data mapping method of the transmitter determined, the data demapping method of the receiver is also clear. Therefore, the data demapping method of the receiver is not described in detail in this application.

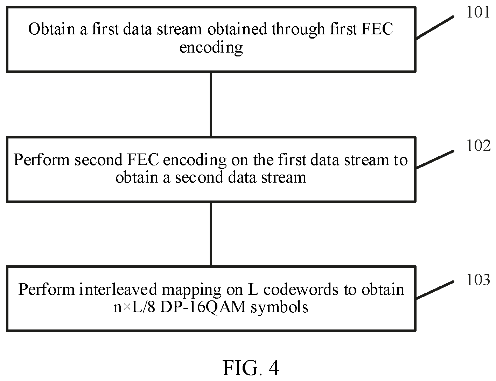

FIG. 4 is a schematic flowchart of a data mapping method according to an embodiment of this application. The data mapping method includes the following steps. The following describes the steps in detail. It should be understood that, for ease of description, first FEC encoding in the following may be considered as the outer encoding described above, and second FEC encoding in the following may be considered as the inner encoding described above. The following may be understood based on this.

101: Obtain a first data stream obtained through the first FEC encoding.

It should be understood that a specific implementation of the outer encoding is not limited in this application. In an example, the outer encoding may specifically use staircase (512, 510) encoding. In some possible scenarios, the first data stream obtained through the outer encoding may also be referred to as an encoded data frame, and bits in the encoded data frame are distributed in rows and columns.

102: Perform the second FEC encoding on the first data stream to obtain a second data stream.

In this embodiment of this application, the second data stream obtained through the inner encoding includes L inner codewords, and L is an integer multiple of 8. Each codeword includes n bits in total, including k information bits and (n-k) parity bits, and n is not exactly divisible by 8. Each codeword includes r bit subsets, each bit subset includes d bits, and a quantity of bits included in each codeword is $n=r\times d$. Specifically, d may be a greatest common divisor of n and 8. For example, d=1, 2, or 4.

In a possible implementation, the inner encoding may specifically use BCH encoding or extended BCH encoding over $GF(2^m)$ with t-bit (t=2) error correction in this embodiment of this application, to improve an error correction capability of the inner codeword to t=2 bits, to be specific, one inner codeword can be used to correct at most t=2 bits, thereby improving concatenated coding performance. GF is a finite field, and may also be referred to as a Galois field (Galois field), and $2^m$ represents an order of the finite field. (n-k) parity bits in an inner codeword encoded by using the BCH encoding do not include a cyclic redundancy check (cyclic redundancy check, CRC) extended parity bit, and (n-k) parity bits in an inner codeword encoded by using the extended BCH encoding include a 1-bit or 2-bit CRC extended parity bit. If the (n-k) parity bits do not include the CRC extended parity bit, $n-k=m\times t$; if the (n-k) parity bits include the 1-bit CRC extended parity bit, $n-k=m\times t01$; or if the (n-k) parity bits include the 2-bit CRC extended parity bit, $n-k=m\times t02$.

In an example, k=119. If d=1, a length of an inner codeword is an odd number of bits. The following Table 1 provides several possible inner encoding schemes. n represents the length of the inner codeword, k represents an information sequence length of the inner codeword, "no extension" in remarks means that there is no CRC extended parity bit in a parity sequence, "single-bit extension" in the remarks means that there is a 1-bit CRC extended parity bit in the parity sequence, and "double extension" in the remarks means that there is a 2-bit CRC extended parity bit in the parity sequence. Scheme 1 and Scheme 2 in Table 1 are constructed over $GF(2^8)$, and Scheme 3 and Scheme 4 in Table 1 are constructed over $GF(2^7)$.

Table 1

| Scheme | k | n | Remarks |
|---|---|---|---|
| 1 | 119 | 135 | No extension |
| 2 | 119 | 137 | Double extension |
| 3 | 119 | 133 | No extension |

(continued)

| Scheme | k | n | Remarks |
|---|---|---|---|
| 4 | 119 | 135 | Double extension |

In another example, k=119. If d=2, a length n of an inner codeword may be 134, and a parity sequence includes the 1-bit CRC extended parity bit. This scheme is constructed over GF($2^7$).

103: Perform interleaved mapping on the L codewords to obtain n×L/8 DP-16QAM symbols.

It should be understood that a symbol mapping manner includes but is not limited to quadrature phase shift keying (Quadrature Phase Shift Keying, QPSK) and quadrature amplitude modulation (Quadrature Amplitude Modulation, QAM). Then, a dual-polarization (Dual-polarization, DP) symbol, for example, DP-QPSK, DP-8QAM, DP-16QAM, DP-32QAM, and DP-64QAM, is further obtained through polarization symbol distribution. In this embodiment of this application, a DP-16QAM symbol is mainly used as an example for description.

Specifically, any component of an I (in-phase) component in an X polarization direction, a Q (quadrature-phase) component in the X polarization direction, an I (in-phase) component in a Y polarization direction, and a Q (quadrature-phase) component in the Y polarization direction that are of each DP-16QAM symbol is obtained by mapping 2 bits in the L codewords, and each DP-16QAM symbol is obtained by mapping 8 bits respectively from eight codewords. The X polarization direction and the Y polarization direction are orthogonal to each other, and any component of the DP-16QAM symbol may also be referred to as a PAM4 symbol component.

In this embodiment of this application, interleaved mapping is performed by using a d-bit bit subset as a minimum granularity, to minimize interleaving implementation complexity. To be specific, when the length n of the inner codeword is a multiple of 4, interleaved mapping is performed by using d=4 bits or one equivalent 16QAM symbol as a minimum granularity. When the length n of the inner codeword is a multiple of 2, interleaved mapping is performed by using d=2 bits or one equivalent PAM4 symbol as a minimum granularity. When the length n of the inner codeword is an odd number, that is, d=1, interleaved mapping is performed by using a single bit as a minimum granularity.

It should be noted that interleaved mapping described herein may be actually one operation. Alternatively, interleaved mapping may include a plurality of operations. For example, interleaved mapping includes symbol mapping, polarization distribution, and interleaving operations. In a possible implementation, interleaving is first performed on the L codewords to disrupt a sequence of the L codewords, and then symbol mapping and polarization distribution are performed on the interleaved L codewords to obtain the needed n×L/8 DP-16QAM symbols. In another possible implementation, symbol mapping and polarization distribution are first performed on the L codewords, and then interleaving is performed to obtain the needed n×L/8 DP-16QAM symbols.

It should be noted that interleaved mapping designed in this embodiment of this application are mainly considered in two aspects. In a first aspect, it is considered that bits in each codeword are mapped to most significant bits (most significant bits, MSBs) and least significant bits (least significant bits, LSBs) of the four polarization components in n×L/8 DP-16QAM symbols as evenly as possible. Because the MSB and the LSB have different noise resistance capabilities, bits in each inner codeword are evenly mapped to the MSBs and the LSBs, so that encoding and decoding performance can be maximized. In a second aspect, it is considered that, quantities of bits that are from respective codewords and that are in 2×n×L/8 bits included in any polarization component of the n×L/8 DP-16QAM symbols are as close as possible or the same, and quantities of bits that are of respective codewords and that are mapped to any polarization component of the n×L/8 DP-16QAM symbols are as close as possible or the same. This helps reduce performance deterioration caused by continuous errors. The following further describes the two aspects in detail.

In consideration of the first aspect, L/2 inner codewords of the L inner codewords may be denoted as first-type codewords, and the other L/2 inner codewords of the L inner codewords may be denoted as second-type codewords. $\lfloor \frac{n}{2} \rfloor$ bits in each of the first-type codewords are mapped to MSBs of the four polarization components in the n×L/8 DP-16QAM symbols, $\lceil \frac{n}{2} \rceil$ bits in each of the first-type codewords are mapped to LSBs of the four polarization components in the n×L/8 DP-16QAM symbols, $\lceil \frac{n}{2} \rceil$ bits in each of the second-type codewords are mapped to MSBs of the four polarization components in the n×L/8 DP-16QAM symbols, and $\lfloor \frac{n}{2} \rfloor$ bits in each of the second-type codewords are mapped to LSBs of the four polarization components in the n×L/8 DP-16QAM symbols. $\lfloor \cdot \rfloor$ represents rounding down, and $\lceil \cdot \rceil$ represents rounding up. It should be understood that, in a scenario in which d=2 or 4, that is, n is an even number, both $\lfloor \frac{n}{2} \rfloor$ and $\lceil \frac{n}{2} \rceil$ are equal to $\frac{n}{2}$.

In consideration of the second aspect, a quantity of bits that are from any codeword and that are in the 2×n×L/8 bits included in any polarization component of the n×L/8 DP-16QAM symbols is denoted as w, and a quantity of bits that are of each codeword and that are mapped to any polarization component of the n×L/8 DP-16QAM symbols is denoted as r. In a scenario in which d=1, $2 \times \left\lfloor \frac{n}{8} \right\rfloor \leq w \leq 2 \times \left\lceil \frac{n}{8} \right\rceil$ , and $2 \times \left\lfloor \frac{n}{8} \right\rfloor \leq r \leq 2 \times \left\lceil \frac{n}{8} \right\rceil$ . In a scenario in which d=2, w = $2 \times \left\lfloor \frac{n}{8} \right\rfloor$ or $2 \times \left\lceil \frac{n}{8} \right\rceil$ , and $r = 2 \times \left\lfloor \frac{n}{8} \right\rfloor$ or $2 \times \left\lceil \frac{n}{8} \right\rceil$ . In a scenario in which d=4, $w = 2 \times \left\lfloor \frac{n}{8} \right\rfloor$ or $2 \times \left\lceil \frac{n}{8} \right\rceil$ , and $r = 4 \times \left\lfloor \frac{n}{16} \right\rfloor$ or $4 \times \left\lceil \frac{n}{16} \right\rceil$ .

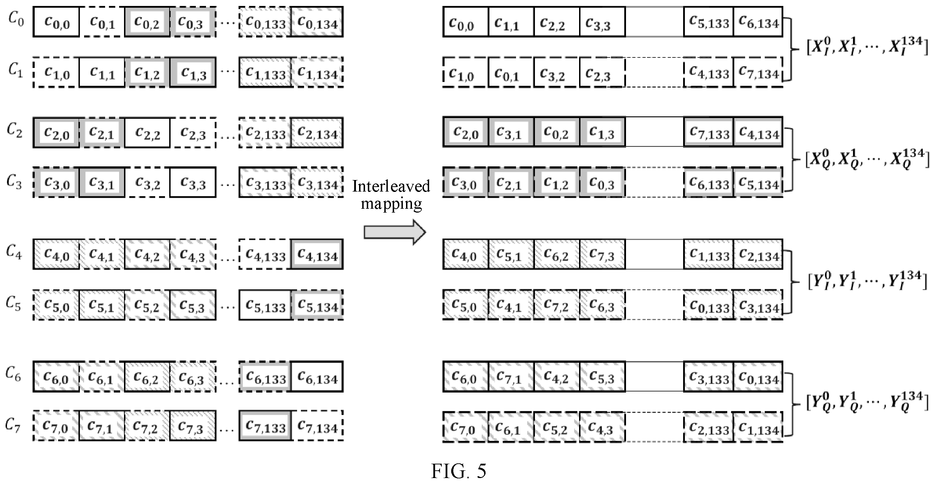

The following provides several specific interleaved mapping manners based on different values of d. It should be understood that the following several interleaved mapping manners are described by using an example in which L=8. $X_I^l$ represents an lth PAM4 symbol component of an I component in an X polarization direction in the n DP-16QAM symbols, $X_Q^l$ represents an lth PAM4 symbol component of a Q component in the X polarization direction in the n DP-16QAM symbols, $Y_I^l$ represents an lth PAM4 symbol component of an I component in a Y polarization direction in the n DP-16QAM symbols, and $Y_Q^l$ represents an lth PAM4 symbol component of a Q component in the Y polarization direction in the n DP-16QAM symbols, where $0 \leq l \leq n-1$, a%b represents a modulo operation on a using b, and a^b represents an exclusive OR operation of a and b. In the following FIG. 5 to FIG. 8, solid boxes and dashed boxes are used to distinguish between bits mapped to MSBs and LSBs of four polarization components in a DP-16QAM symbol, and different shadow parts in FIG. 5 to FIG. 8 are used to distinguish between bits of the four polarization components in the DP-16QAM symbol. It should be further understood that, for conditions that are satisfied by exclusive OR shift and cyclic shift interleaved mapping manners and that are described in the following application scenarios, the conditions provided in this embodiment of this application are merely one possible implementation. In addition, a person skilled in the art may further make flexible modifications based on the conditions provided in this embodiment of this application to achieve interleaved mapping effect shown in FIG. 5 to FIG. 8. Details are not listed herein one by one.

FIG. 5 is a diagram of a first application scenario of interleaved mapping according to an embodiment of this application. As shown in FIG. 5, n=135 is used as an example. In a scenario in which d=1, the interleaved mapping is performed in an exclusive OR shift manner. Specifically, the exclusive OR shift interleaved mapping satisfies the following conditions:

$X_I^l$ is obtained by mapping an lth bit of a (0^(l%8))th codeword and an lth bit of a (1^(l%8))th codeword;

$X_Q^l$ is obtained by mapping an lth bit of a (2^(l%8)) th codeword and an lth bit of a (3^(l%8))th codeword;

$Y_I^l$ is obtained by mapping an lth bit of a (4^(l%8))th codeword and an lth bit of a (5^(l%8))th codeword; and

$Y_Q^l$ is obtained by mapping an lth bit of a (6^(l%8)) th codeword and an lth bit of a (7^(l%8))th codeword.

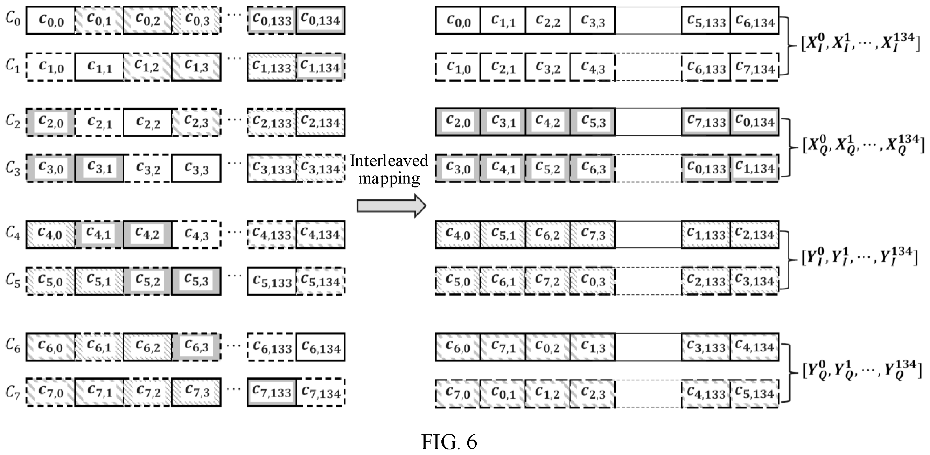

FIG. 6 is a diagram of a second application scenario of interleaved mapping according to an embodiment of this application. As shown in FIG. 6, n=135 is used as an example. In a scenario in which d=1, the interleaved mapping is performed in a cyclic shift manner. Specifically, the cyclic shift interleaved mapping satisfies the following conditions:

$X_I^l$ is obtained by mapping an lth bit of a ((00l)%8) th codeword and an lth bit of a (10l)%8))th codeword;

$X_Q^l$ is obtained by mapping an lth bit of a ((20l)%8) th codeword and an lth bit of a (30l)%8))th codeword;

$Y_I^l$ is obtained by mapping an lth bit of a ((40l)%8) th codeword and an lth bit of a (50l)%8))th codeword; and

$Y_Q^l$ is obtained by mapping an lth bit of a ((60l)%8) th codeword and an lth bit of a (70l)%8))th codeword.

It should be noted that, in embodiments shown in FIG. 5 and FIG. 6, in $2 \times 135 = 270$ bits corresponding to each lane of signal in $X_I$, $X_Q$, $Y_I$, and $Y_Q$, a quantity of bits from any codeword is 33 or 34, and satisfies $2 \times \left\lfloor \frac{n}{8} \right\rfloor \leq w \leq 2 \times \left\lceil \frac{n}{8} \right\rceil$ . From a perspective of a codeword, a quantity of bits that are finally mapped to any one of the four components and that are in each codeword is 33 or 34, and satisfies $2 \times \left\lfloor \frac{n}{8} \right\rfloor \leq r \leq 2 \times \left\lceil \frac{n}{8} \right\rceil$ . In addition, $\left\lfloor \frac{n}{2} \right\rfloor = 67$ bits in a first-type codeword are mapped to MSBs of the four polarization components in 135 DP-16QAM symbols, $\left\lceil \frac{n}{2} \right\rceil = 68$ bits in the first-type codeword are mapped to LSBs of the four polarization components in the 135

DP-16QAM symbols, $\lceil\frac{n}{2}\rceil=68$ bits in a second-type codeword are mapped to the MSBs of the four polarization components in the 135 DP-16QAM symbols, and $\lfloor\frac{n}{2}\rfloor=67$ bits in the second-type codeword are mapped to the LSBs of the four polarization components in the 135 DP-16QAM symbols.

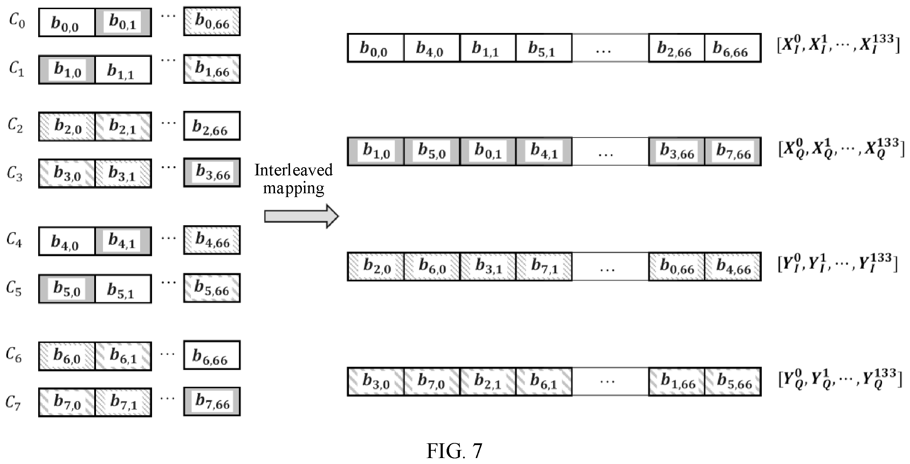

FIG. 7 is a diagram of a third application scenario of interleaved mapping according to an embodiment of this application. As shown in FIG. 7, n=134 is used as an example. In a scenario in which d=2, interleaved mapping is performed in an exclusive OR shift manner. Specifically, the exclusive OR shift interleaved mapping satisfies the following conditions:

$X_I^l$ is obtained by mapping a $(2 \times \lfloor\frac{l}{2}\rfloor)$th bit and a $(2 \times \lfloor\frac{l}{2}\rfloor + 1)$th bit of a $(4 \times (l\%2)(\lfloor\frac{l}{2}\rfloor\%4))$th codeword;

$X_Q^l$ is obtained by mapping a $(2 \times \lfloor\frac{l}{2}\rfloor)$th bit and a $(2 \times \lfloor\frac{l}{2}\rfloor + 1)$th bit of a $((104 \times (l\%2))(\lfloor\frac{l}{2}\rfloor\%4))$th codeword;

$Y_I^l$ is obtained by mapping a $(2 \times \lfloor\frac{l}{2}\rfloor)$th bit and a $(2 \times \lfloor\frac{l}{2}\rfloor + 1)$th bit of a $((204 \times (l\%2))(\lfloor\frac{l}{2}\rfloor\%4))$th codeword; and

$Y_Q^l$ is obtained by mapping a $(2 \times \lfloor\frac{l}{2}\rfloor)$th bit and a $(2 \times \lfloor\frac{l}{2}\rfloor + 1)$th bit of a $((304 \times (l\%2))(\lfloor\frac{l}{2}\rfloor\%4))$th codeword.

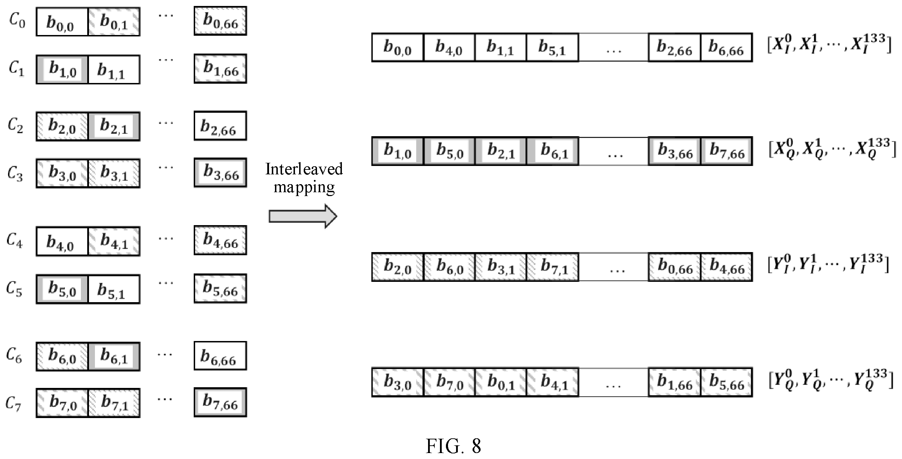

FIG. 8 is a diagram of a fourth application scenario of interleaved mapping according to an embodiment of this application. As shown in FIG. 8, n=134 is used as an example. In a scenario in which d=2, the interleaved mapping is performed in a cyclic shift manner. Specifically, the cyclic shift interleaved mapping satisfies the following conditions:

$X_I^l$ is obtained by mapping a $(2 \times \lfloor\frac{l}{2}\rfloor)$th bit and a $(2 \times \lfloor\frac{l}{2}\rfloor + 1)$th bit of a

$(4 \times l\%2 + \lfloor\frac{l}{2}\rfloor\%4)$th codeword;

$X_Q^l$ is obtained by mapping a $(2 \times \lfloor\frac{l}{2}\rfloor)$th bit and a $(2 \times \lfloor\frac{l}{2}\rfloor + 1)$th bit of a $(1 + 4 \times l\%2 + \lfloor\frac{l}{2}\rfloor\%4)$th codeword;

$Y_I^l$ is obtained by mapping a $(2 \times \lfloor\frac{l}{2}\rfloor)$th bit and a $(2 \times \lfloor\frac{l}{2}\rfloor + 1)$th bit of a $(2 + 4 \times l\%2 + \lfloor\frac{l}{2}\rfloor\%4)$th codeword; and

$Y_Q^l$ is obtained by mapping a $(2 \times \lfloor\frac{l}{2}\rfloor)$th bit and a $(2 \times \lfloor\frac{l}{2}\rfloor + 1)$th bit of a $(3 + 4 \times l\%2 + \lfloor\frac{l}{2}\rfloor\%4)$th codeword.

It should be noted that, in embodiments shown in FIG. 7 and FIG. 8, in $2 \times 134 = 268$ bits corresponding to each lane of signal in $X_I$, $X_Q$, $Y_I$, and $Y_Q$, a quantity of bits from any codeword is $2 \times \lfloor\frac{n}{8}\rfloor=32$ or $2 \times \lceil\frac{n}{8}\rceil = 34$. From a perspective of a codeword, a quantity of bits that are finally mapped to any one of the four components and that are in each codeword is $2 \times \lfloor\frac{n}{8}\rfloor = 32$ or $2 \times \lceil\frac{n}{8}\rceil = 34$. In addition, $\frac{n}{2}=67$ bits in each codeword are mapped to MSBs of four polarization components in 134 DP-16QAM symbols, and $\frac{n}{2}=67$ bits in each codeword are mapped to LSBs of the four polarization components in 134 P-16QAM symbols.

For a scenario in which d=4, no accompanying drawing is provided herein. Based on FIG. 5 to FIG. 8, modifications are made based on an actual value of n. Interleaved mapping provided herein is performed in a cyclic shift manner, and for interleaved mapping performed in an exclusive OR shift manner, modifications may be made based on embodiments shown in FIG. 5 or FIG. 7. Specifically, the cyclic shift interleaved mapping satisfies the following conditions:

$X_I^l$ is obtained by mapping a $(4 \times \lfloor\frac{l}{4}\rfloor)$th bit and a $(4 \times \lfloor\frac{l}{4}\rfloor + 1)$th bit of a

$(2 \times l\%4((\lfloor \frac{l}{4} \rfloor \%2))$th codeword;

$X_Q^l$ is obtained by mapping a $(4 \times \lfloor \frac{l}{4} \rfloor 02)$th bit and a $(4 \times \lfloor \frac{l}{4} \rfloor + 3)$th bit of a $(2 \times l\%4((\lfloor \frac{l}{4} \rfloor \%2))$th codeword;

$Y_I^l$ is obtained by mapping a $(4 \times \lfloor \frac{l}{4} \rfloor 02)$th bit and a $(4 \times \lfloor \frac{l}{4} \rfloor + 3)$th bit of a $((102 \times l\%4)(\lfloor \frac{l}{4} \rfloor \%2))$th codeword; and

$Y_Q^l$ is obtained by mapping a $(4 \times \lfloor \frac{l}{4} \rfloor 02)$th bit and a $(4 \times \lfloor \frac{l}{4} \rfloor + 3)$th bit of a $((102 \times l\%4)(\lfloor \frac{l}{4} \rfloor \%2))$th codeword.

FIG. 5 to FIG. 8 provide several implementations of interleaved mapping in a scenario in which L=8. The following further provides an implementation of interleaved mapping in a scenario in which L=16 and in an example of d=1. For implementations in which L and d are other values, flexible modifications are made based on embodiments provided in this application. Details are not described herein one by one.

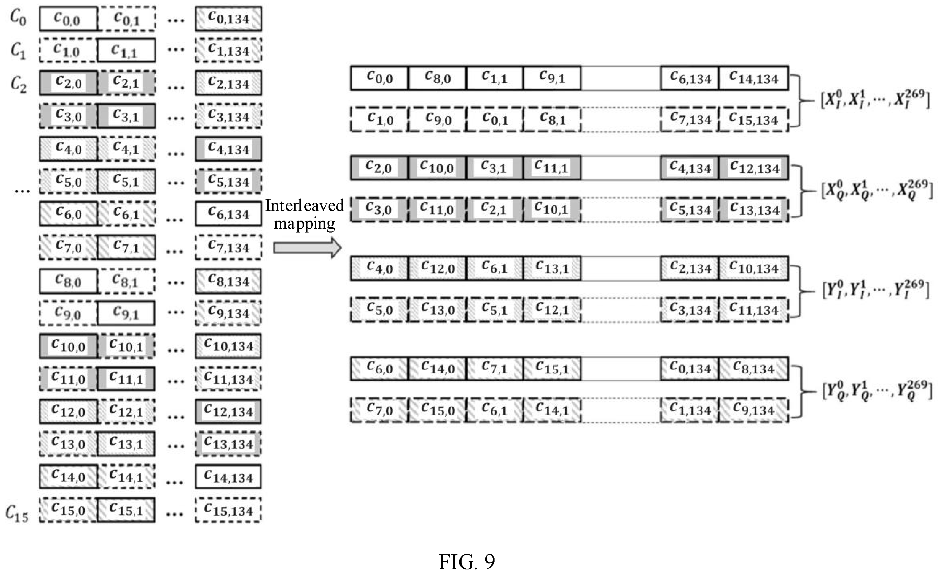

FIG. 9 is a diagram of a fifth application scenario of interleaved mapping according to an embodiment of this application. As shown in FIG. 9, n=135 is used as an example. In a scenario in which d=1, interleaved mapping is performed in an exclusive OR shift manner. Specifically, the exclusive OR shift interleaved mapping satisfies the following conditions:

$X_I^l$ is obtained by mapping an $\lfloor \frac{l}{2} \rfloor$th bit of an $(8 \times (l\%(2))00((\lfloor \frac{l}{2} \rfloor \%8))$th codeword and an $\lfloor \frac{l}{2} \rfloor$th bit of an $(8 \times (l\%(2))01((\lfloor \frac{l}{2} \rfloor \%8))$th codeword;

$X_Q^l$ is obtained by mapping an $\lfloor \frac{l}{2} \rfloor$th bit of an $(8 \times (l\%(2))02((\lfloor \frac{l}{2} \rfloor \%8))$th codeword and an $\lfloor \frac{l}{2} \rfloor$th bit of an $(8 \times (l\%(2))03((\lfloor \frac{l}{2} \rfloor \%8))$th codeword;

$Y_I^l$ is obtained by mapping an $\lfloor \frac{l}{2} \rfloor$th bit of an $(8 \times (l\%(2))04((\lfloor \frac{l}{2} \rfloor \%8))$th codeword and an $\lfloor \frac{l}{2} \rfloor$th bit of an $(8 \times (l\%(2))05((\lfloor \frac{l}{2} \rfloor \%8))$th codeword; and

$Y_Q^l$ is obtained by mapping an $\lfloor \frac{l}{2} \rfloor$th bit of an $(8 \times (l\%(2))06((\lfloor \frac{l}{2} \rfloor \%8))$th codeword and an $\lfloor \frac{l}{2} \rfloor$th bit of an $(8 \times (l\%(2))07((\lfloor \frac{l}{2} \rfloor \%8))$th codeword.

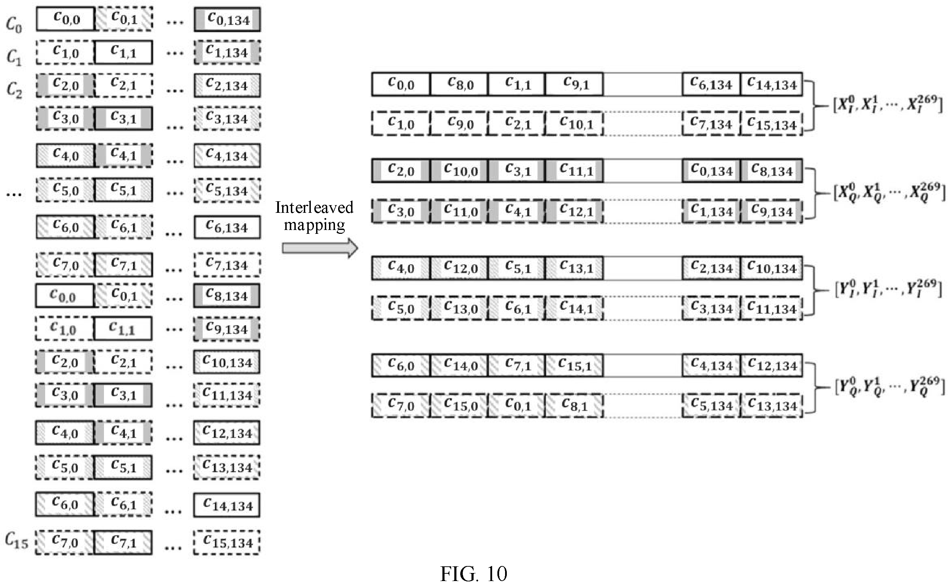

FIG. 10 is a diagram of a sixth application scenario of interleaved mapping according to an embodiment of this application. As shown in FIG. 10, n=135 is used as an example. In a scenario in which d=1, the interleaved mapping is performed in a cyclic shift manner. Specifically, the cyclic shift interleaved mapping satisfies the following conditions:

$X_I^l$ is obtained by mapping an $\lfloor \frac{l}{2} \rfloor$th bit of an $(8 \times (l\%(2))0((00\lfloor \frac{l}{2} \rfloor)\%8))$th codeword and an $\lfloor \frac{l}{2} \rfloor$th bit of an $(8 \times (l\%(2))0((10\lfloor \frac{l}{2} \rfloor)\%8))$th codeword;

$X_Q^l$ is obtained by mapping an $\lfloor \frac{l}{2} \rfloor$th bit of an $(8 \times (l\%(2))0((20\lfloor \frac{l}{2} \rfloor)\%8))$th codeword and an $\lfloor \frac{l}{2} \rfloor$th bit of an $(8 \times (l\%(2))0((30\lfloor \frac{l}{2} \rfloor)\%8))$th codeword;

$Y_I^l$ is obtained by mapping an $\lfloor \frac{l}{2} \rfloor$th bit of an $(8 \times (l\%(2))0((40\lfloor \frac{l}{2} \rfloor)\%8))$th codeword and an $\lfloor \frac{l}{2} \rfloor$th bit of an $(8 \times (l\%(2))0((50\lfloor \frac{l}{2} \rfloor)\%8))$th codeword; and

$Y_Q^l$ is obtained by mapping an $\lfloor \frac{l}{2} \rfloor$th bit of an

$(8\times(l\%(2))0((60\lfloor\frac{l}{2}\rfloor)\%8))$th    codeword

and an $\lfloor\frac{l}{2}\rfloor$th bit of an

$(8\times(l\%(2))0((70\lfloor\frac{l}{2}\rfloor)\%8))$th codeword.

It should be noted that, in embodiments shown in FIG. 9 and FIG. 10, in $16\times\frac{135}{4}=540$ bits corresponding to each lane of signal in $X_I$, $X_Q$, $Y_I$, $Y_Q$, a quantity of bits from any codeword is 33 or 34, and satisfies $2\times\lfloor\frac{n}{8}\rfloor\leq w\leq 2\times\lceil\frac{n}{8}\rceil$. From a perspective of a codeword, a quantity of bits that are finally mapped to any one of the four components and that are in each codeword is 33 or 34, and satisfies $2\times\lfloor\frac{n}{8}\rfloor\leq r\leq 2\times\lceil\frac{n}{8}\rceil$. In addition, $\lfloor\frac{n}{2}\rfloor=67$ bits in a first-type codeword are mapped to MSBs of the four polarization components in 270 DP-16QAM symbols, $\lceil\frac{n}{2}\rceil=68$ bits in the first-type codeword are mapped to LSBs of the four polarization components in the 270 DP-16QAM symbols, $\lceil\frac{n}{2}\rceil=68$ bits in a second-type codeword are mapped to MSBs of the four polarization components in the 270 DP-16QAM symbols, and $\lfloor\frac{n}{2}\rfloor=67$ bits in the second-type codeword are mapped to LSBs of the four polarization components in 270 DP-16QAM symbols.

It should be noted that, in this embodiment of this application, in addition to step 101 to step 103 described above, another operation may be further performed between the outer encoding and the inner encoding. For example, at least one padding bit is added to a data stream after the outer encoding. A specific quantity of padding bits is subject to an actual application, and is not limited herein. For another example, after the padding bit is added, a data stream may be further scrambled. A specific scrambling manner is subject to an actual application, and is not limited herein. For still another example, after scrambling, convolutional interleaving may be further performed on a data stream. A specific convolutional interleaving manner is subject to an actual application, and is not limited herein.

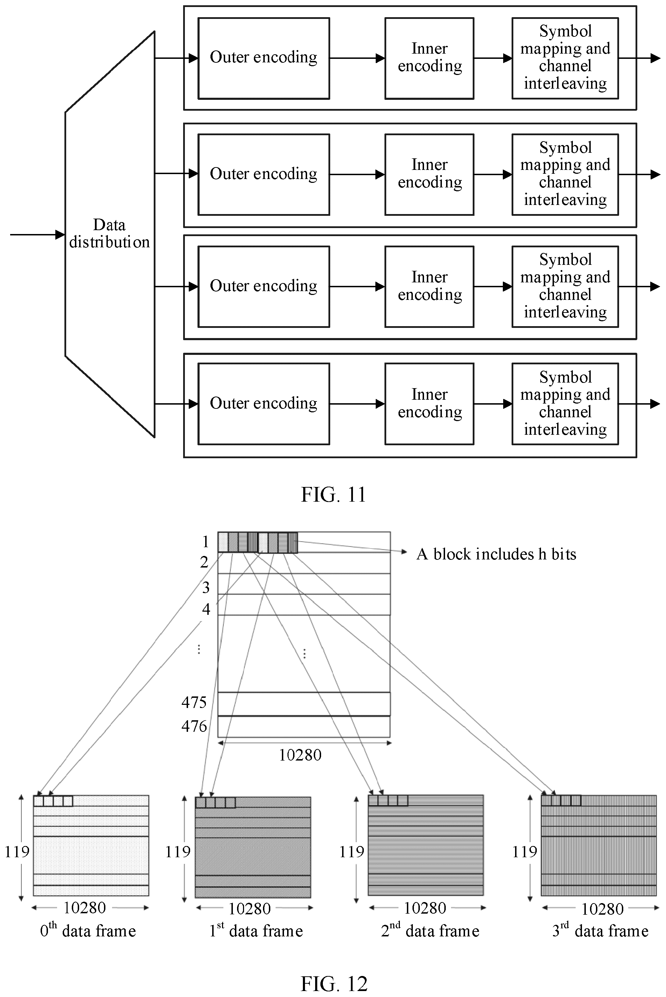

The foregoing describes the data mapping method provided in embodiments of this application. It should be understood that in some possible scenarios, considering that an FEC scheme may potentially need to be compatible with a throughput such as 1.6T, 800G, or 400G and considering hardware implementation in an ultra-high throughput, a multi-lane parallel data processing solution may be further proposed based on the foregoing embodiments. FIG. 11 is a diagram of an implementation of a multi-lane parallel transmitter data processor according to an embodiment of this application. As shown in FIG. 11, an input data stream is first distributed to obtain four lanes of data streams, and then data processing is performed on each lane of distributed data stream in the data processing manner shown in FIG. 3.

FIG. 12 is a diagram of an implementation of data distribution according to an embodiment of this application. As shown in FIG. 12, consecutive 4×119×10280-bit data is first obtained, and then four data frames are obtained through distribution in a round robin manner and at a granularity of h bits. Bits in each data frame are arranged as 119 rows and 10280 columns. Outer encoding may be performed on the four data frames to obtain four encoded data frames, and subsequent data processing is performed on each encoded data frame in the manner shown in FIG. 3. It should be understood that 10280%(4×h)=0, for example, h=1, 257, 514, or 1285. This scheme is used to be better compatible with a throughput such as 1.6T, 800G, or 400G. In an example, when an input data frame is a 1.6T service, the data frame may be distributed into four lanes for processing as shown in FIG. 10. In another example, when the input data frame is an 800G service, the data frame may be distributed into two lanes for processing, and the other two lanes are disabled to reduce power consumption. In still another example, when the input data frame is a 400G service, data frame distribution may be omitted, data processing shown in FIG. 3 is directly performed on the data frame, and the other three lanes are disabled to reduce power consumption.

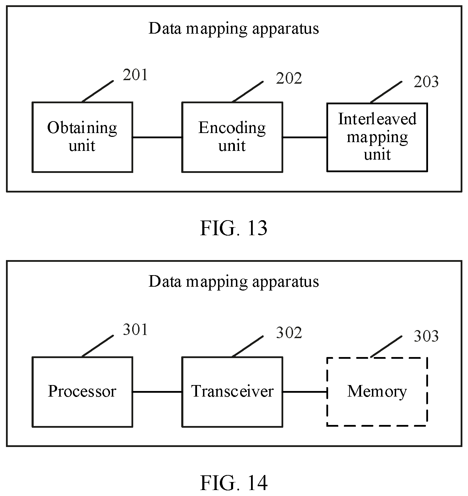

FIG. 13 is a diagram of a structure of a data mapping apparatus according to an embodiment of this application. As shown in FIG. 13, the data mapping apparatus includes an obtaining unit 201, an encoding unit 202, and an interleaved mapping unit 203. The obtaining unit 201 is configured to perform an operation in step 101, the encoding unit 202 is configured to perform an operation in step 102, and the interleaved mapping unit 203 is configured to perform an operation in step 103. It should be understood that the data mapping apparatus provided in this application may also be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 14 is a diagram of another structure of a data mapping apparatus according to an embodiment of this application. As shown in FIG. 14, the data mapping apparatus includes a processor 301 and a transceiver 302. The processor 301 and the transceiver 302 are interconnected through a line. Specifically, the transceiver 302 is configured to perform data sending and receiving operations, and the processor 301 is configured to perform another operation other than data sending and receiving operations. In a possible implementation, the processor 301 may include the encoding unit 202 and the interleaved mapping unit 203 shown in FIG. 13, and the transceiver 302 includes the obtaining unit 201 shown in FIG. 13. Optionally, the data mapping apparatus may further include a memory 303, where the memory 303 is configured to store program instructions and data.

An embodiment of this application further provides a chip. The chip integrates a circuit and one or more interfaces that are configured to implement a function of the processor 301. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data mapping method, comprising:

   obtaining a first data stream obtained through first forward error correction FEC encoding;
   performing second FEC encoding on the first data stream to obtain a second data stream, wherein the second data stream comprises L codewords obtained through second FEC encoding, L is an integer multiple of 8, each codeword comprises n bits, and n is an odd number greater than 1; and
   performing interleaved mapping on the L codewords to obtain n×L/8 dual-polarization DP-16QAM symbols, wherein any one of an I component in an X polarization direction, a Q component in the X polarization direction, an I component in a Y polarization direction, and a Q component in the Y polarization direction that are of each DP-16QAM symbol is obtained by mapping 2 bits in the L codewords, and each DP-16QAM symbol is obtained by mapping 8 bits respectively from eight codewords.

2. The method according to claim 1, wherein the L codewords comprise L/2 first-type codewords and L/2 second-type codewords, $\lfloor \frac{n}{2} \rfloor$ bits in each of the first-type codewords are mapped to most significant bits MSBs of four polarization components in the n×L/8 DP-16QAM symbols, $\lceil \frac{n}{2} \rceil$ bits in each of the first-type codewords are mapped to least significant bits LSBs of the four polarization components in the n×L/8 DP-16QAM symbols, $\lceil \frac{n}{2} \rceil$ bits in each of the second-type codewords are mapped to MSBs of the four polarization components in the n×L/8 DP-16QAM symbols, $\lfloor \frac{n}{2} \rfloor$ bits in each of the second-type codewords are mapped to LSBs of the four polarization components in the n×L/8 DP-16QAM symbols, $\lfloor \cdot \rfloor$ represents rounding down, and $\lceil \cdot \rceil$ represents rounding up.

3. The method according to claim 1 or 2, wherein a quantity of bits that are from any codeword and that are in 2×n×L/8 bits comprised in any polarization component of the n×L/8 DP-16QAM symbols is w, and $2 \times \lfloor \frac{n}{8} \rfloor \leq w \leq 2 \times \lceil \frac{n}{8} \rceil$.

4. The method according to any one of claims 1 to 3, wherein a quantity of bits that are of each codeword and that are mapped to any polarization component of the n×L/8 DP-16QAM symbols is r, and

$$2 \times \lfloor \frac{n}{8} \rfloor \leq r \leq 2 \times \lceil \frac{n}{8} \rceil.$$

5. The method according to any one of claims 1 to 4, wherein every L/8 consecutive DP-16QAM symbols of the n×L/8 DP-16QAM symbols are obtained by mapping L bits respectively from the L codewords.

6. The method according to any one of claims 1 to 5, wherein $X_I^l$ is obtained by mapping an $\lfloor \frac{8l}{L} \rfloor$ th bit of an $(8 \times (l\%(\frac{L}{8}))\,00((\lfloor \frac{8l}{L} \rfloor\%8))^{th}$ codeword and an $\lfloor \frac{8l}{L} \rfloor$ th bit of an $(8 \times (l\%(\frac{L}{8}))\,01((\lfloor \frac{8l}{L} \rfloor\%8))^{th}$ codeword, $X_Q^l$ is obtained by mapping an $\lfloor \frac{8l}{L} \rfloor$ th bit of an $(8 \times (l\%(\frac{L}{8}))\,02((\lfloor \frac{8l}{L} \rfloor\%8))^{th}$ codeword and

an $\lfloor\frac{8l}{L}\rfloor^{\text{th}}$ bit of an $(8\times(l\%(\frac{L}{8}))03((\lfloor\frac{8l}{L}\rfloor\%8))^{\text{th}}$ codeword, $Y_I^l$ is obtained by mapping an $\lfloor\frac{8l}{L}\rfloor^{\text{th}}$ bit of an $(8\times(l\%(\frac{L}{8}))04((\lfloor\frac{8l}{L}\rfloor\%8))^{\text{th}}$ codeword and an $\lfloor\frac{8l}{L}\rfloor^{\text{th}}$ bit of an $(8\times(l\%(\frac{L}{8}))05((\lfloor\frac{8l}{L}\rfloor\%8))^{\text{th}}$ codeword, and $Y_Q^l$ is obtained by mapping an $\lfloor\frac{8l}{L}\rfloor^{\text{th}}$ bit of an $(8\times(l\%(\frac{L}{8}))06((\lfloor\frac{8l}{L}\rfloor\%8))^{\text{th}}$ codeword and an $\lfloor\frac{8l}{L}\rfloor^{\text{th}}$ bit of an $(8\times(l\%(\frac{L}{8}))07((\lfloor\frac{8l}{L}\rfloor\%8))^{\text{th}}$ codeword, wherein

$X_I^l$ represents an $l^{\text{th}}$ pulse amplitude modulation PAM4 symbol component of an I component in the X polarization direction in the n×L/8 DP-16QAM symbols, $X_Q^l$ represents an $l^{\text{th}}$ PAM4 symbol component of a Q component in the X polarization direction in the n×L/8 DP-16QAM symbols, $Y_I^l$ represents an $l^{\text{th}}$ PAM4 symbol component of an I component in the Y polarization direction in the n×L/8 DP-16QAM symbols, and $Y_Q^l$ represents an $l^{\text{th}}$ PAM4 symbol component of a Q component in the Y polarization direction in the n×L/8 DP-16QAM symbols, wherein $0\le l\le\frac{L\times n}{8}-1$, a%b represents a modulo operation on a using b, and a^b represents an exclusive OR operation of a and b.

7. The method according to any one of claims 1 to 5, wherein $X_I^l$ is obtained by mapping an $\lfloor\frac{8l}{L}\rfloor^{\text{th}}$ bit of an $(8\times(l\%(\frac{L}{8}))\,0((00\,\lfloor\frac{8l}{L}\rfloor)\%8))^{\text{th}}$ codeword and an $\lfloor\frac{8l}{L}\rfloor^{\text{th}}$ bit of an $(8\times(l\%(\frac{L}{8}))\,0((10\,\lfloor\frac{8l}{L}\rfloor)\%8))^{\text{th}}$ codeword, $X_Q^l$ is obtained by mapping an $\lfloor\frac{8l}{L}\rfloor^{\text{th}}$ bit of an $(8\times(l\%(\frac{L}{8}))0((20\lfloor\frac{8l}{L}\rfloor)\%8))^{\text{th}}$

codeword and an $\lfloor\frac{8l}{L}\rfloor^{\text{th}}$ bit of an $(8\times(l\%(\frac{L}{8}))0(30\lfloor\frac{8l}{L}\rfloor)\%8))^{\text{th}}$ codeword, $Y_I^l$ is obtained by mapping an $\lfloor\frac{8l}{L}\rfloor^{\text{th}}$ bit of an $(8\times(l\%(\frac{L}{8}))0(40\lfloor\frac{8l}{L}\rfloor)\%8))^{\text{th}}$ codeword and an $\lfloor\frac{8l}{L}\rfloor^{\text{th}}$ bit of an $(8\times(l\%(\frac{L}{8}))0(50\lfloor\frac{8l}{L}\rfloor)\%8))^{\text{th}}$ codeword, and $Y_Q^l$ is obtained by mapping an $\lfloor\frac{8l}{L}\rfloor^{\text{th}}$ bit of an $(8\times(l\%(\frac{L}{8}))0((60\lfloor\frac{8l}{L}\rfloor)\%8))^{\text{th}}$ codeword and an $\lfloor\frac{8l}{L}\rfloor^{\text{th}}$ bit of an $(8\times(l\%(\frac{L}{8}))0(70\lfloor\frac{8l}{L}\rfloor)\%8))^{\text{th}}$ codeword, wherein

$X_I^l$ represents an $l^{\text{th}}$ PAM4 symbol component of an I component in the X polarization direction in the n×L/8 DP-16QAM symbols, $X_Q^l$ represents an $l^{\text{th}}$ PAM4 symbol component of a Q component in the X polarization direction in the n×L/8 DP-16QAM symbols, $Y_I^l$ represents an $l^{\text{th}}$ PAM4 symbol component of an I component in the Y polarization direction in the n×L/8 DP-16QAM symbols, and $Y_Q^l$ represents an $l^{\text{th}}$ PAM4 symbol component of a Q component in the Y polarization direction in the n×L/8 DP-16QAM symbols, wherein $0\le l\le\frac{L\times n}{8}-1$.

8. The method according to any one of claims 1 to 7, wherein a quantity of information bits in the codeword is k=119, and n=133, 135, or 137.

9. The method according to any one of claims 1 to 8, wherein the first FEC encoding uses staircase (512, 510) encoding.

10. The method according to any one of claims 1 to 9, wherein bit padding is further performed on the first data stream obtained through the first FEC encoding, and a quantity of padding bits is greater than or equal to 1.

11. The method according to any one of claims 1 to 10, wherein convolutional interleaving is further performed on the first data stream obtained through the first FEC encoding.

12. The method according to any one of claims 1 to 11, wherein before obtaining the first data stream obtained through the first FEC encoding, the method further comprises:

   performing data distribution on an input data stream to obtain four lanes of distributed data streams, wherein every four consecutive bits in the input data stream are respectively distributed to the four lanes of distributed data streams; and
   performing the first FEC encoding on each lane of the distributed data streams.

13. A data mapping apparatus, wherein the data mapping apparatus comprises: an obtaining unit, an encoding unit, and an interleaved mapping unit, wherein

   the obtaining unit is configured to obtain a first data stream obtained through first forward error correction FEC encoding;
   the encoding unit is configured to perform second FEC encoding on the first data stream to obtain a second data stream, wherein the second data stream comprises L codewords obtained through second FEC encoding, L is an integer multiple of 8, each codeword comprises n bits, and n is an odd number greater than 1; and
   the interleaved mapping unit is configured to perform interleaved mapping on the L codewords to obtain n×L/8 dual-polarization DP-16QAM symbols, wherein any one of an I component in an X polarization direction, a Q component in the X polarization direction, an I component in a Y polarization direction, and a Q component in the Y polarization direction that are of each DP-16QAM symbol is obtained by mapping 2 bits in the L codewords, and each DP-16QAM symbol is obtained by mapping 8 bits respectively from eight codewords.

14. The data mapping apparatus according to claim 13, wherein the L codewords comprise L/2 first-type codewords and L/2 second-type codewords, $\lfloor \frac{n}{2} \rfloor$ bits in each of the first-type codewords are mapped to most significant bits MSBs of four polarization components in the n×L/8 DP-16QAM symbols, $\lceil \frac{n}{2} \rceil$ bits in each of the first-type codewords are mapped to least significant bits LSBs of the four polarization components in the n×L/8 DP-16QAM

symbols, $\lceil \frac{n}{2} \rceil$ bits in each of the second-type codewords are mapped to MSBs of the four polarization components in the n×L/8 DP-16QAM symbols, $\lfloor \frac{n}{2} \rfloor$ bits in each of the second-type codewords are mapped to LSBs of the four polarization components in the n×L/8 DP-16QAM symbols, $\lfloor \cdot \rfloor$ represents rounding down, and $\lceil \cdot \rceil$ represents rounding up.

15. The data mapping apparatus according to claim 13 or 14, wherein a quantity of bits that are from any codeword and that are in 2×n×L/8 bits comprised in any polarization component of the n×L/8 DP-16QAM symbols is w, and

$$2 \times \left\lfloor \frac{n}{8} \right\rfloor \le w \le 2 \times \left\lceil \frac{n}{8} \right\rceil.$$

16. The data mapping apparatus according to any one of claims 13 to 15, wherein a quantity of bits that are of each codeword and that are mapped to any polarization component of the n×L/8 DP-16QAM symbols is r, and $2 \times \left\lfloor \frac{n}{8} \right\rfloor \le r \le 2 \times \left\lceil \frac{n}{8} \right\rceil.$

17. The data mapping apparatus according to any one of claims 13 to 16, wherein every L/8 consecutive DP-16QAM symbols of the n×L/8 DP-16QAM symbols are obtained by mapping L bits respectively from the L codewords.

18. The data mapping apparatus according to any one of claims 13 to 17, wherein $X_I^l$ is obtained by mapping an $\lfloor \frac{8l}{L} \rfloor^{th}$ bit of an $(8 \times (l\%(\frac{L}{8}))00((\lfloor \frac{8l}{L} \rfloor\%8))^{th}$ codeword and an $\lfloor \frac{8l}{L} \rfloor^{th}$ bit of an $(8 \times (l\%(\frac{L}{8}))01((\lfloor \frac{8l}{L} \rfloor\%8))^{th}$ codeword, $X_Q^l$ is obtained by mapping an $\lfloor \frac{8l}{L} \rfloor^{th}$ bit of an $(8 \times (l\%(\frac{L}{8}))02((\lfloor \frac{8l}{L} \rfloor\%8))^{th}$ codeword and an $\lfloor \frac{8l}{L} \rfloor^{th}$ bit of an $(8 \times (l\%(\frac{L}{8}))03((\lfloor \frac{8l}{L} \rfloor\%8))^{th}$ codeword, $Y_I^l$

is obtained by mapping an $\lfloor\frac{8l}{L}\rfloor^{\text{th}}$ bit of an

$(8\times(l\%(\frac{L}{8}))04((\lfloor\frac{8l}{L}\rfloor\%8))^{\text{th}}$ codeword and

an $\lfloor\frac{8l}{L}\rfloor^{\text{th}}$ bit of an

$(8\times(l\%(\frac{L}{8}))05((\lfloor\frac{8l}{L}\rfloor\%8))^{\text{th}}$ codeword, and

$Y_Q^l$ is obtained by mapping an $\lfloor\frac{8l}{L}\rfloor^{\text{th}}$ bit of an

$(8\times(l\%(\frac{L}{8}))06((\lfloor\frac{8l}{L}\rfloor\%8))^{\text{th}}$ codeword and

an $\lfloor\frac{8l}{L}\rfloor^{\text{th}}$ bit of an

$(8\times(l\%(\frac{L}{8}))07((\lfloor\frac{8l}{L}\rfloor\%8))^{\text{th}}$ codeword,

wherein

$X_I^l$ represents an $l$th pulse amplitude modulation PAM4 symbol component of an I component in the X polarization direction in the n×L/8 DP-16QAM symbols, $X_Q^l$ represents an $l$th PAM4 symbol component of a Q component in the X polarization direction in the n×L/8 DP-16QAM symbols, $Y_I^l$ represents an $l$th PAM4 symbol component of an I component in the Y polarization direction in the n×L/8 DP-16QAM symbols, and $Y_Q^l$ represents an $l$th PAM4 symbol component of a Q component in the Y polarization direction in the n×L/8 DP-16QAM symbols, wherein

$0 \le l \le \frac{L \times n}{8} - 1$ , a%b represents a modulo operation on a using b, and a^b represents an exclusive OR operation of a and b.

19. The data mapping apparatus according to any one of claims 13 to 17, wherein $X_I^l$ is obtained by mapping

an $\lfloor\frac{8l}{L}\rfloor^{\text{th}}$ bit of an

$(8\times(l\%(\frac{L}{8}))0((00\lfloor\frac{8l}{L}\rfloor)\%8))^{\text{th}}$ codeword

and an $\lfloor\frac{8l}{L}\rfloor^{\text{th}}$ bit of an

$(8\times(l\%(\frac{L}{8}))0((10\lfloor\frac{8l}{L}\rfloor)\%8))^{\text{th}}$ codeword,

$X_Q^l$ is obtained by mapping an $\lfloor\frac{8l}{L}\rfloor^{\text{th}}$ bit of an

$(8\times(l\%(\frac{L}{8}))0((20\lfloor\frac{8l}{L}\rfloor)\%8))^{\text{th}}$ codeword

and an $\lfloor\frac{8l}{L}\rfloor^{\text{th}}$ bit of an

$(8\times(l\%(\frac{L}{8}))0(30\lfloor\frac{8l}{L}\rfloor)\%8))^{\text{th}}$ codeword,

$Y_I^l$ is obtained by mapping an $\lfloor\frac{8l}{L}\rfloor^{\text{th}}$ bit of an

$(8\times(l\%(\frac{L}{8}))0(40\lfloor\frac{8l}{L}\rfloor)\%8))^{\text{th}}$ codeword and

an $\lfloor\frac{8l}{L}\rfloor^{\text{th}}$ bit of an

$(8\times(l\%(\frac{L}{8}))0(50\lfloor\frac{8l}{L}\rfloor)\%8))^{\text{th}}$ codeword, and

$Y_Q^l$ is obtained by mapping an $\lfloor\frac{8l}{L}\rfloor^{\text{th}}$ bit of an

$(8\times(l\%(\frac{L}{8}))0((60\lfloor\frac{8l}{L}\rfloor)\%8))^{\text{th}}$ codeword and an $\lfloor\frac{8l}{L}\rfloor^{\text{th}}$ bit of an

$(8\times(l\%(\frac{L}{8}))0(70\lfloor\frac{8l}{L}\rfloor)\%8))^{\text{th}}$ codeword,

wherein

$X_I^l$ represents an $l$th PAM4 symbol component of an I component in the X polarization direction in the n×L/8 DP-16QAM symbols, $X_Q^l$ represents an $l$th PAM4 symbol component of a Q component in the X polarization direction in the n×L/8 DP-16QAM symbols, $Y_I^l$ represents an $l$th PAM4 symbol component of an I component in the Y polarization direction in the n×L/8 DP-16QAM symbols, and $Y_Q^l$ represents an $l$th PAM4 symbol component of a Q component in the Y polarization direction in the n×L/8 DP-16QAM symbols, wherein

$0 \le l \le \frac{L \times n}{8} - 1$ .

20. The data mapping apparatus according to any one of claims 13 to 19, wherein a quantity of information bits in the codeword is k=119, and n=133, 135, or 137.

21. The data mapping apparatus according to any one of claims 13 to 20, wherein the first FEC encoding uses staircase (512, 510) encoding.

22. The data mapping apparatus according to any one of claims 13 to 21, wherein bit padding is further performed on the first data stream obtained through the first FEC encoding, and a quantity of padding bits is greater than or equal to 1.

**23.** The data mapping apparatus according to any one of claims 13 to 22, wherein convolutional interleaving is further performed on the first data stream obtained through the first FEC encoding.

**24.** The data mapping apparatus according to any one of claims 13 to 23, wherein the data mapping apparatus further comprises a processing unit, and before obtaining the first data stream obtained through the first FEC encoding, the processing unit is configured to:

perform data distribution on an input data stream to obtain four lanes of distributed data streams, wherein every four consecutive bits in the input data stream are respectively distributed to the four lanes of distributed data streams; and perform the first FEC encoding on each lane of the distributed data streams.

**25.** A chip, wherein the chip comprises a processor and a memory, the memory and the processor are connected to each other through a line, the memory stores instructions, and the processor is configured to perform the method according to any one of claims 1 to 12.

| Transmitter device 01 | Attachment unit interface AUI | Transmitter processing module 02 | Channel transmission medium 03 | Receiver processing module 04 | Attachment unit interface AUI | Receiver device 05 |

FIG. 1

Source → Transmitter data processing → Transmitter signal processing → Channel

Sink ← Receiver data processing ← Receiver signal processing ← Channel

FIG. 2

Transmitter data processing: Outer encoding → Inner encoding → Symbol mapping and channel interleaving → Transmission medium → Receiver data processing: Symbol demapping and channel de-interleaving → Inner decoding → Outer decoding

FIG. 3

Obtain a first data stream obtained through first FEC encoding — 101

Perform second FEC encoding on the first data stream to obtain a second data stream — 102

Perform interleaved mapping on L codewords to obtain n×L/8 DP-16QAM symbols — 103

FIG. 4

FIG. 5

$C_0$ | $c_{0,0}$ | $c_{0,1}$ | $c_{0,2}$ | $c_{0,3}$ | ... | $c_{0,133}$ | $c_{0,134}$

$C_1$ | $c_{1,0}$ | $c_{1,1}$ | $c_{1,2}$ | $c_{1,3}$ | ... | $c_{1,133}$ | $c_{1,134}$

$C_2$ | $c_{2,0}$ | $c_{2,1}$ | $c_{2,2}$ | $c_{2,3}$ | ... | $c_{2,133}$ | $c_{2,134}$

$C_3$ | $c_{3,0}$ | $c_{3,1}$ | $c_{3,2}$ | $c_{3,3}$ | ... | $c_{3,133}$ | $c_{3,134}$

$C_4$ | $c_{4,0}$ | $c_{4,1}$ | $c_{4,2}$ | $c_{4,3}$ | ... | $c_{4,133}$ | $c_{4,134}$

$C_5$ | $c_{5,0}$ | $c_{5,1}$ | $c_{5,2}$ | $c_{5,3}$ | ... | $c_{5,133}$ | $c_{5,134}$

$C_6$ | $c_{6,0}$ | $c_{6,1}$ | $c_{6,2}$ | $c_{6,3}$ | ... | $c_{6,133}$ | $c_{6,134}$

$C_7$ | $c_{7,0}$ | $c_{7,1}$ | $c_{7,2}$ | $c_{7,3}$ | ... | $c_{7,133}$ | $c_{7,134}$

Interleaved mapping

$c_{0,0}$ | $c_{1,1}$ | $c_{2,2}$ | $c_{3,3}$ | | $c_{5,133}$ | $c_{6,134}$
$c_{1,0}$ | $c_{2,1}$ | $c_{3,2}$ | $c_{4,3}$ | | $c_{6,133}$ | $c_{7,134}$ $\quad [X_I^0, X_I^1, \cdots, X_I^{134}]$

$c_{2,0}$ | $c_{3,1}$ | $c_{4,2}$ | $c_{5,3}$ | | $c_{7,133}$ | $c_{0,134}$
$c_{3,0}$ | $c_{4,1}$ | $c_{5,2}$ | $c_{6,3}$ | | $c_{0,133}$ | $c_{1,134}$ $\quad [X_Q^0, X_Q^1, \cdots, X_Q^{134}]$

$c_{4,0}$ | $c_{5,1}$ | $c_{6,2}$ | $c_{7,3}$ | | $c_{1,133}$ | $c_{2,134}$
$c_{5,0}$ | $c_{6,1}$ | $c_{7,2}$ | $c_{0,3}$ | | $c_{2,133}$ | $c_{3,134}$ $\quad [Y_I^0, Y_I^1, \cdots, Y_I^{134}]$

$c_{6,0}$ | $c_{7,1}$ | $c_{0,2}$ | $c_{1,3}$ | | $c_{3,133}$ | $c_{4,134}$
$c_{7,0}$ | $c_{0,1}$ | $c_{1,2}$ | $c_{2,3}$ | | $c_{4,133}$ | $c_{5,134}$ $\quad [Y_Q^0, Y_Q^1, \cdots, Y_Q^{134}]$

FIG. 6

EP 4 776 539 A1

$C_0$ | $b_{0,0}$ | $b_{0,1}$ | $\cdots$ | $b_{0,66}$

$C_1$ | $b_{1,0}$ | $b_{1,1}$ | $\cdots$ | $b_{1,66}$

$C_2$ | $b_{2,0}$ | $b_{2,1}$ | $\cdots$ | $b_{2,66}$

$C_3$ | $b_{3,0}$ | $b_{3,1}$ | $\cdots$ | $b_{3,66}$

$C_4$ | $b_{4,0}$ | $b_{4,1}$ | $\cdots$ | $b_{4,66}$

$C_5$ | $b_{5,0}$ | $b_{5,1}$ | $\cdots$ | $b_{5,66}$

$C_6$ | $b_{6,0}$ | $b_{6,1}$ | $\cdots$ | $b_{6,66}$

$C_7$ | $b_{7,0}$ | $b_{7,1}$ | $\cdots$ | $b_{7,66}$

Interleaved mapping

$b_{0,0}$ | $b_{4,0}$ | $b_{1,1}$ | $b_{5,1}$ | $\cdots$ | $b_{2,66}$ | $b_{6,66}$   $[X_I^0, X_I^1, \cdots, X_I^{133}]$

$b_{1,0}$ | $b_{5,0}$ | $b_{0,1}$ | $b_{4,1}$ | $\cdots$ | $b_{3,66}$ | $b_{7,66}$   $[X_Q^0, X_Q^1, \cdots, X_Q^{133}]$

$b_{2,0}$ | $b_{6,0}$ | $b_{3,1}$ | $b_{7,1}$ | $\cdots$ | $b_{0,66}$ | $b_{4,66}$   $[Y_I^0, Y_I^1, \cdots, Y_I^{133}]$

$b_{3,0}$ | $b_{7,0}$ | $b_{2,1}$ | $b_{6,1}$ | $\cdots$ | $b_{1,66}$ | $b_{5,66}$   $[Y_Q^0, Y_Q^1, \cdots, Y_Q^{133}]$

FIG. 7

EP 4 776 539 A1

$C_0$ | $b_{0,0}$ | $b_{0,1}$ | $\cdots$ | $b_{0,66}$

$C_1$ | $b_{1,0}$ | $b_{1,1}$ | $\cdots$ | $b_{1,66}$

$C_2$ | $b_{2,0}$ | $b_{2,1}$ | $\cdots$ | $b_{2,66}$

$C_3$ | $b_{3,0}$ | $b_{3,1}$ | $\cdots$ | $b_{3,66}$

$C_4$ | $b_{4,0}$ | $b_{4,1}$ | $\cdots$ | $b_{4,66}$

$C_5$ | $b_{5,0}$ | $b_{5,1}$ | $\cdots$ | $b_{5,66}$

$C_6$ | $b_{6,0}$ | $b_{6,1}$ | $\cdots$ | $b_{6,66}$

$C_7$ | $b_{7,0}$ | $b_{7,1}$ | $\cdots$ | $b_{7,66}$

Interleaved mapping

$b_{0,0}$ | $b_{4,0}$ | $b_{1,1}$ | $b_{5,1}$ | $\cdots$ | $b_{2,66}$ | $b_{6,66}$    $[X_I^0, X_I^1, \cdots, X_I^{133}]$

$b_{1,0}$ | $b_{5,0}$ | $b_{2,1}$ | $b_{6,1}$ | $\cdots$ | $b_{3,66}$ | $b_{7,66}$    $[X_Q^0, X_Q^1, \cdots, X_Q^{133}]$

$b_{2,0}$ | $b_{6,0}$ | $b_{3,1}$ | $b_{7,1}$ | $\cdots$ | $b_{0,66}$ | $b_{4,66}$    $[Y_I^0, Y_I^1, \cdots, Y_I^{133}]$

$b_{3,0}$ | $b_{7,0}$ | $b_{0,1}$ | $b_{4,1}$ | $\cdots$ | $b_{1,66}$ | $b_{5,66}$    $[Y_Q^0, Y_Q^1, \cdots, Y_Q^{133}]$

FIG. 8

26

FIG. 9

EP 4 776 539 A1

FIG. 10

EP 4 776 539 A1

FIG. 11

A block includes h bits

10280

119    119    119    119

10280    10280    10280    10280

0$^{th}$ data frame    1$^{st}$ data frame    2$^{nd}$ data frame    3$^{rd}$ data frame

FIG. 12

Data mapping apparatus

201

Obtaining
unit

202

Encoding
unit

203

Interleaved
mapping
unit

FIG. 13

Data mapping apparatus

301

Processor

302

Transceiver

303

Memory

FIG. 14

## INTERNATIONAL SEARCH REPORT

| | International application No. |
|---|---|
| | **PCT/CN2024/097254** |

| | |
|---|---|
| **A.** | **CLASSIFICATION OF SUBJECT MATTER** |

H04L 1/00(2006.01)i

According to International Patent Classification (IPC) or to both national classification and IPC

| | |
|---|---|
| **B.** | **FIELDS SEARCHED** |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, CNKI, DWPI, ENTXT, 3GPP, IEEE: 映射, 码字, 编码, 交织, 分量, 偏振, map+, code word, QAM, FEC, polariz+

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 107360114 A (CHONGQING UNIVERSITY OF POSTS AND TELECOMMUNICATIONS) 17 November 2017 (2017-11-17) entire document | 1-25 |
| A | CN 113612573 A (HUAWEI TECHNOLOGIES CO., LTD.) 05 November 2021 (2021-11-05) entire document | 1-25 |
| A | US 2021135766 A1 (MAXIM INTEGRATED PRODUCTS, INC.) 06 May 2021 (2021-05-06) entire document | 1-25 |
| A | SAMSUNG. "R1-1705333, "Open Issues on Layer Mapping"" *3GPP tsg_ran\WG1_RL1*, No. TSGR1_88b, 24 March 2017 (2017-03-24), entire document | 1-25 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 July 2024** | **09 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097254**

| Patent document cited in search report | | | Publication date (day/month/year) | Patent family member(s) | | | Publication date (day/month/year) |
|---|---|---|---|---|---|---|---|
| CN | 107360114 | A | 17 November 2017 | None | | | |
| CN | 113612573 | A | 05 November 2021 | None | | | |
| US | 2021135766 | A1 | 06 May 2021 | US | 11233574 | B2 | 25 January 2022 |
| | | | | DE | 102020129209 | A1 | 06 May 2021 |
| | | | | US | 2022149955 | A1 | 12 May 2022 |
| | | | | US | 11811460 | B2 | 07 November 2023 |

Form PCT/ISA/210 (patent family annex) (July 2022)

**EP 4 776 539 A1**

## REFERENCES CITED IN THE DESCRIPTION

**Patent documents cited in the description**

- CN 202311294686